# EUROPEAN PATENT SPECIFICATION

(11) **EP 4 515 449 B1**
(45) Date of publication and mention of the grant of the patent: **23.09.2026**
(21) Application number: 23722556.0
(22) Date of filing: 26.04.2023
(51) Int. Cl.: G06K 19/07, G06K 19/077

(54) **SMARTCARD MILLING TECHNIQUE**
CHIPKARTE-FRÄSVERFAHREN
TECHNIQUE DE FRAISAGE DE CARTE À PUCE

(30) Priority: 27.04.2022 GB 202206141
(43) Date of publication of application: 05.03.2025
(73) Proprietor: Smart Packaging Solutions, 13790 Rousset (FR)
(72) Inventor: LAVARENNE, Rémi, 2316 Les Ponts-de-Martel (CH)
(74) Representative: Bouvier, Thibault
(86) International application number: PCT/EP2023/061046
(87) International publication number: WO 2023/209056

(56) References cited:
- EP-A1- 3 401 835
- WO-A1-2021/081175
- US-A1- 2017 116 505

## Description

The present disclosure relates to the manufacturing of a smartcard, and particularly a biometrically-authorisable smartcard.

A biometrically-authorisable smartcard typically comprises two modules that are implanted in a smartcard body after lamination of the smartcard body. One is a smartcard IC module and the other is a biometric sensor module. These modules may be electrically connected to one another by wires embedded within the smartcard body such that power and/or data can be transferred between the two modules.

The implanting process commonly comprises milling sufficiently sized cavities in the smartcard body to house the modules. When these cavities are milled, it is necessary to expose contact pads of the embedded wires so they can be electrically connected to the modules. Once the cavities are milled, the modules are implanted into their respective cavity and electrically connected to the contact pads.

Document US 2017/116505 A1 for example, discloses a method for manufacturing a smart card body comprising the steps of milling a plurality of cavities at different depths, wherein a metallic layer connects at least two cavities together (see Figure 12). Thus, this document discloses a method for manufacturing a smart card body, comprising forming a layer of plastic material and embedding a wire within the layer of a plastic material.

One method of exposing the contact pads during a milling process is to cut into the smartcard body to a fixed depth where the contact pads are expected to be. This method works well for smartcard arrangements with a high precision of wire placement. However, in cases where manufacturing tolerances are lower, milling a fixed depth may not expose the contact pads sufficiently to achieve good electrical connection to the smartcard modules.

A need exists for an improved method of manufacturing a smartcard.

Viewed from a first aspect, the present invention provides a method for use in manufacturing a smartcard, according to claim 1.

The described method advantageously makes use of a longer embedded wire in the smartcard body during the milling process, while maintaining separate wires in the final smartcard. This allows the milling process to more precisely mill to a depth where the wire is exposed.

Optionally, exposing the contact pads involves cutting into the wire to reveal a portion of the wire from within the smartcard body.

Optionally, cutting the wire between the first and second contact pads of the second cavity region involves completely separating the first and second contact pad within the second cavity region such that they are no longer electrically coupled.

Optionally, any one or more or all of the first and second contact pads of each cavity region are sections of the wire that are arranged in a back and forth or serpentine path. The back and forth or serpentine path may comprise at least three passes. Alternatively, the contact pads may be metal plates that are soldered to the embedded wire.

Optionally, the method further comprises implanting a first module within the first cavity. Where the first and second cavities are formed in the same cavity region, the first module may be implanted within both the first and second cavities, i.e. with part of the module in the first cavity and part of the module in the second cavity.

Optionally, the implanting comprising electrically connecting first and second contacts of the first module to the first and second contact pads in the respective cavity region.

Optionally, the first module comprises one of a smartcard IC module and a biometric sensor module.

Optionally, the method further comprises: generating an electromagnetic field adjacent to the smartcard body, wherein the electromagnetic field induces an induced voltage in the wire. The method may comprise maintaining the electromagnetic field whilst the first cavity is milled.

Optionally, a sensor is configured to detect that the first cavity has been milled to the first depth based on detection of the induced voltage. Advantageously, the continuous wire allows a larger voltage to be induced in the wire than if the wire were instead two separate, shorter, wires. Thus, the sensor may more easily detect the induced voltage leading to a more reliable milling depth when compared to the case with two separate, shorter, wires.

Optionally, the first cavity is milled by a milling machine.

Optionally, the sensor is electrically coupled to a cutting tool of the milling machine. Advantageously, this allows the sensor to detect the induced voltage while the first cavity is being milled.

Optionally, when the first cavity is milled in the first cavity region, the method further comprises milling a third cavity exposing the first and second contact pads in the second cavity region.

Optionally, when the first cavity is milled in the first cavity region, the method further comprises implanting a second module into the second cavity region. Optionally, the implanting comprising electrically connecting first and second contacts of the second module to the first and second contacts pads in the second cavity region.

Optionally, when the first cavity is milled in the first cavity region, the method further comprises milling a fourth cavity in the first cavity region that is deeper than the first depth and is sized to house the main bulk of the first module such that the first module may sit flush with the surface of the smartcard.

Optionally, the second module comprises one of a smartcard IC module and a biometric sensor module.

Optionally, when the first module comprises a smartcard IC module, the second module comprises a biometric sensor module.

Optionally, when the first module comprises a biometric sensor module, the second module comprises a smartcard IC module.

Alternatively, either of the first and second modules may be any other smartcard module.

Optionally, when the first cavity is milled in the second cavity region, the method further comprises milling a third cavity in the first cavity region exposing the first and second contact pads in the first cavity region.

Optionally when the first cavity is milled in the second cavity region, the method further comprises milling a fourth cavity in the first cavity region that is deeper than the first depth and is sized to house the main bulk of the first module such that the first module may sit flush with the surface of the smartcard.

Optionally, when the first cavity is milled in the first cavity region, the method further comprises implanting a second module into the first cavity region. The implanting comprising electrically connecting first and second contacts of the second module to the first and second contacts pads in the first cavity region.

The third cavity may be milled before or after the fourth cavity is milled. Additionally, the third and fourth cavities may each be milled before or after milling the first and/or second cavities.

Optionally, the third cavity is milled after implanting the first module within the first cavity.

Optionally, the smartcard is one of: an access card; a payment card (such as a credit card, a debit card or a pre-pay card); a loyalty card; or an identity card.

Optionally, the smartcard has dimensions of 3 3/8 inches by 2 1/8 inches (approx. 86 mm by 54 mm) and optionally the smartcard has a thickness of 30 mil (approx. 0.76 mm).

Optionally, the smartcard is an ID-1 smartcard in accordance with international standard of ISO/IEC 7810.

Optionally, the wire comprises a conductive core, such as a copper core. Optionally, the wire is coated with an electrically insulating material. Optionally, the conductive core of the wire has a thickness of between 70µm and 150µm.

Optionally, two cavities are milled within at least one of the first and second cavity regions, which comprise a relatively deep cavity to receive the main bulk of an implanted module and a relatively shallow cavity to expose the contact pads in the respective cavity region. Optionally, a relatively deep cavity and a relative shallow cavity are milled within each of the first and second cavity regions.

For example, the first cavity and the fourth cavity may be milled in the first cavity region, and the first cavity may be shallow relative to the fourth cavity. Likewise, the second cavity and the third cavity may be milled in the second cavity region, and the third cavity may be shallow relative to the second cavity.

Optionally, the relatively deep cavity is milled before milling the relatively shallow cavity in each respective cavity region. This is advantageous since the risk of pulling out the embedded wires during the milling process is reduced and thus throughput and yield of the process is increased. That is to say, if the shallow cavities are milled first, there is an increased risk of damaging the embedded wires when milling the deep cavity since the exposed wires are less securely held within the inlay.

Alternatively, both of the shallow cavities (e.g. the first and third cavities) may be milled before the second cavity to make use of the increased induced voltage from the large continuous wire loops when exposing the first and second contact pads in their respective cavities.

Optionally, when one of the modules is a smartcard IC module and the other module is a biometric sensor module, it is preferable to mill the cavities suitable for receiving the smartcard IC module and implanting the smartcard IC module before milling the cavities suitable for receiving the biometric sensor module in order to allow the smartcard IC module to be tested. This is advantageous because the biometric sensor module is often the most expensive component in the smartcard, and so it is desirable to install and test other components first to minimise wastage of this component.

Viewed from a second aspect the invention provides a smartcard body comprising a wire embedded within the smartcard body, according to claim 12.

Optionally, the first and second contact pads in the first cavity region or the first and second contact pads in the second cavity region are configured to be exposed by a first cavity milled in the respective cavity region to a first depth.

Optionally, a portion of the wire connecting the first contact pads extends through the first cavity region, the portion of the wire being configured to be cut by a second cavity milled in the first cavity region to a second depth.

Optionally, the wire extends outside of the first cavity region, from each of the first pads, to a second cavity region.

Optionally, the smartcard body comprises an antenna wire embedded within the body formed of plastic material, the antenna wire being configured for connection to a module received in one of the first and second cavity regions.

Optionally, the smartcard body may comprise any of the features of the smartcard body described in respect of the first aspect.

Viewed from a third aspect, the invention provides a method for use in manufacturing a smartcard body, according to claim 5.

Optionally, the method further comprises laminating the layer of plastic material between front and back layers formed from plastic material.

Optionally, the first and second contact pads in the first cavity region or the first and second contact pads in the second cavity region are configured to be exposed by a first cavity milled in the respective cavity region to a first depth.

Optionally, a portion of the wire connecting the first and second contact pads in the second cavity region extends through the second cavity region, the portion of the wire being configured to be cut by a second cavity milled in the second cavity region to a second depth.

Optionally, the method further comprises embedding an antenna wire within the layer for connection to a module received in one of the first and second cavity regions.

Optionally, the method may form a smartcard body. The smartcard body may comprise any of the features of the smartcard body of the second aspect.

Certain preferred embodiments of the present invention will now be described in greater detail, by way of example only, and with reference to the accompanying drawings, in which:
Figure 1 shows a front view of a smartcard;
Figure 2A shows a front schematic view of the internal wiring of the smartcard of Figure 1;
Figure 2B shows a cross-sectional view of through the smartcard of Figure 1;
Figure 3A shows a front schematic view of the internal wiring of a smartcard body for use in manufacturing the smartcard of Figure 1;
Figure 3B shows a cross-sectional view through the smartcard body of Figure 3A;
Figure 4A shows a front view of the smartcard body of Figure 3A after the first cavity region has been milled;
Figure 4B shows a cross-sectional view of the milled smartcard body of Figure 4A;
Figure 5A shows a front view of the smartcard body of Figure 3A after the second cavity region has been milled;
Figure 5B shows a cross-sectional view of the milled smartcard body of Figure 5A;
Figure 6 is a flowchart showing a method of manufacturing the smartcard body of Figure 3A; and
Figure 7 is a flowchart showing a method of manufacturing the smartcard of Figure 1 using the smartcard body of Figure 3A.

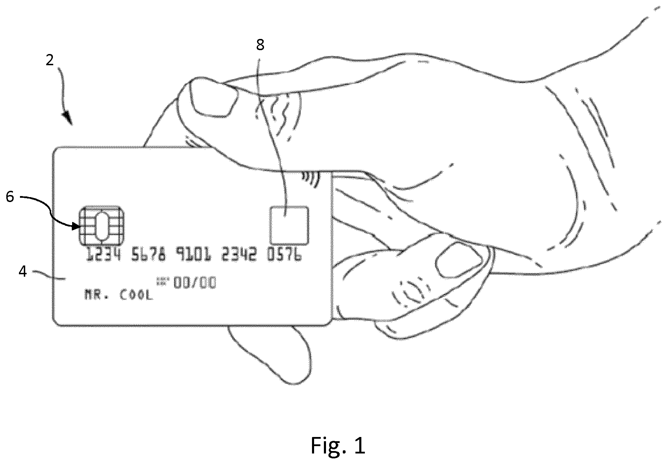

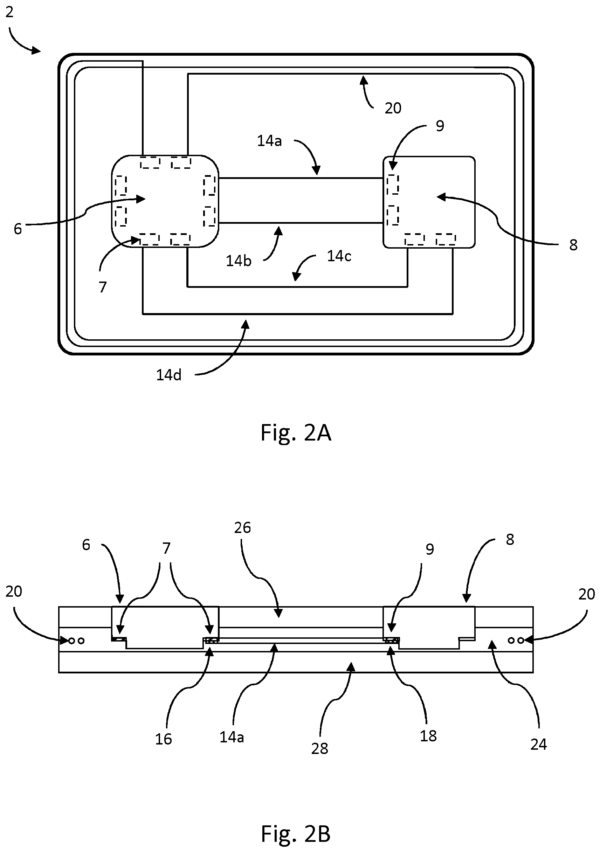

A smartcard 2 will first be discussed with reference to Figures 1, 2A and 2B.

Figure 1 shows a front view of a completed smartcard 2 comprising two embedded modules, a smartcard IC module 6 received within a first cavity region 10, which will be referred to as the smartcard IC module cavity region 10, and a biometric sensor module 8 received within a second cavity region 12 which will be referred to as the biometric sensor module cavity region 12.

Figure 2A is a front schematic view showing the internal structure of the smartcard 2, and Figure 2B is a schematic cross-sectional side view of the smartcard 2. The thickness in the cross-sectional view has been exaggerated to better illustrate the internal components of the smartcard 2.

The smartcard 2 comprises an inlay 24 laminated between a top layer 26 and a bottom layer 28. Embedded within the inlay 24 is an antenna wire 20 for receiving an RF (radio-frequency) signal. The smartcard IC module 6 is powered by the antenna wire 20, and the biometric sensor module 8 is powered by the smartcard IC module 6. The antenna wire 20 forms two antenna contact pads 22, one at either end, and is electrically connected to the smartcard IC module 6.

The biometric sensor module 8 and the smartcard IC module 6 are electrically coupled via four embedded wires 14a, 14b, 14c, 14d. Two of the embedded wires 14a, 14b are arranged to transmit power from the smartcard IC module 6 to the biometric sensor module 8, and the other two embedded wires 14c, 14d are arranged to transmit data between the smartcard IC module 6 and the biometric sensor module 8.

Although the described smartcard 2 comprises four embedded wires 14a-d, the smartcard 2 may instead comprise more or fewer embedded wires 14a-d.

The embedded wires 14a-d each comprise two contact pads 16,18, one at either end. The first contact pad 16 of each embedded wire 14a-d is electrically connected to the smartcard IC module 6 and the second contact pad 18 of each embedded wire 14a-d is electrically connected to the biometric sensor module 8.

The embedded wires 14a-d comprise a copper core and are coated with an electrically insulating material. The wires in the illustrated embodiment are approximately 130µm thick, however, the thickness of the embedded wires 14a-d may be greater or less than this size. In the illustrated embodiment, the copper core is 112µm thick and the insulating coating is 9µm thick.

For simplicity, in Figure 2B only one embedded wire 14a is shown with a first contact pad 16 and a second contact pad 18. Additionally, the third and fourth embedded wires and their respective contact pads are not shown in this Figure. The thickness in the cross-sectional view has been exaggerated to better illustrate the internal components of the smartcard 2.

The smartcard IC module 6 comprises a contact plate and a secure element which are electrically connected to permit transmission of power and data between the contact plate and the secure element. In the illustrated embodiment, the secure element is fixed to the rear of the contact plate, such that the smartcard IC module 6 comprises a single component. The smartcard IC module 6 may comprise a single silicon die with one or more additional components such as capacitors that together form a single component. Alternatively, the smartcard IC module 6 may comprise several silicon dies.

The smartcard IC module 6 further comprises eight contacts 7 suitable for connecting to up to eight embedded wires. In the described smartcard 2, only six of these contacts 7 are used for connection to the first contact pads 16 of the embedded wires 14a-d and to the antenna contact pads 22 of the antenna wire 20. Two of the contacts 7 are therefore unused. The contacts 7 are located on the rear face of the smartcard IC module 6, as illustrated by the dotted lines of Figure 2A.

The contact plate of the smartcard IC module 6 is configured to be exposed from the front face of the smartcard 2 and comprises six or eight "pins" that are configured in accordance with the ISO/IEC 7816 standard for contact cards. These pins permit transmission of power and transmission of data between the secure element of the smartcard IC module 6 and an external device, such as a smartcard reader.

The secure element comprises a memory and a processor, which are configured in a tamper-resistant manner, such that the secure element is capable of securely hosting applications and storing confidential and cryptographic data. The secure element is configured to perform various smartcard functions.

The biometric sensor module 8 includes a processing unit and a fingerprint reader, which is preferably an area fingerprint reader. The fingerprint reader may be a capacitive fingerprint reader. Alternatively, the fingerprint reader may be a thermal, mechanical, or optical fingerprint reader. The biometric sensor module 8 is passive, and hence is powered only by the voltage output from the antenna wire 20. The processing unit comprises a microprocessor that is chosen to be of very low power and very high speed, so as to be able to perform biometric capture in a reasonable time.

The biometric sensor module 8 further includes four contacts 9 suitable for connection to the second contact pads 18 of the embedded wires 14a-d. In this way, the biometric sensor module 8 is electrically coupled to the smartcard IC module 6 via the embedded wires 14a-d. The contacts 9 are located on the rear face of the biometric sensor module 8, as illustrated by the dotted lines of Figure 2A.

When the smartcard 2 is presented to a contactless smartcard reader or the like (not shown) during a financial transaction, the antenna wire 20 harvests power from a radio-frequency excitation field, such as an RFID or NFC excitation field, that is produced by the smartcard reader. Since the antenna 20 is electrically connected to the smartcard IC module 6, power harvested by the antenna wire 20 is provided to the smartcard IC module 6. The antenna 20 further permits communication between the smartcard IC module 6 and the contactless smartcard reader.

The power harvested by the antenna 20 is in turn provided by the smartcard IC module 6 to the biometric sensor module 8. A user may present biometric information, such as a finger or thumb print, to the powered biometric sensor module 8. A determination is then made as to whether the scanned fingerprint matches the pre-stored fingerprint data. It is desirable for the smartcard 2 to be able to complete the process of capturing a fingerprint image via the fingerprint sensor and authenticating the user via the secure element of the smartcard IC module 6 within about one second.

In the illustrated embodiment, the biometric sensor module 8 is arranged to scan a finger or thumb presented to the fingerprint reader and to transmit the scanned fingerprint to the secure element. The secure element then compares the scanned fingerprint to pre-stored fingerprint data in order to verify the identity of the bearer of the card. However, in other embodiments, the biometric matching may be performed within the biometric sensor module 8, and only the result is transmitted to the secure element.

If a match is determined between the scanned fingerprint and the pre-stored fingerprint data, then the smartcard IC module 8 takes appropriate action depending on its programming. In this example, if there is a match with the pre-stored fingerprint data, then the secure element within the smartcard 2 may authorise a payment. The same process may also be used to authorise other actions that are only to be performed by an authorised person.

Manufacture of the smartcard 2 requires forming a smartcard body 4 in which the modules 8, 6 can be implanted.

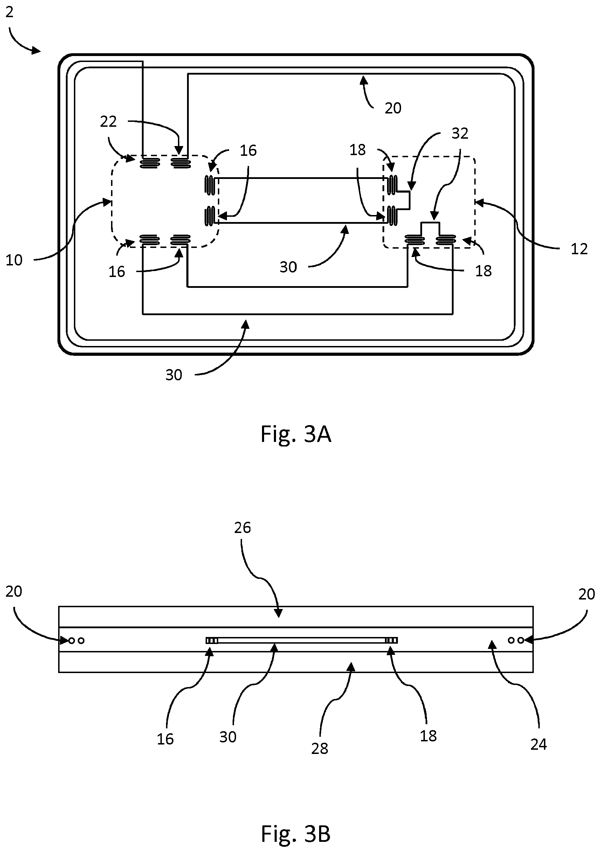

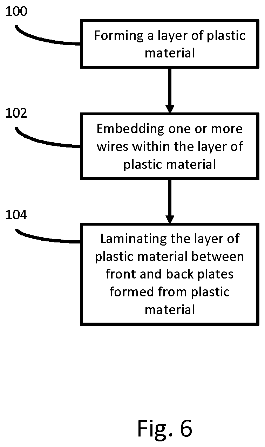

Figure 3A shows a front view of a smartcard body 4 formed using the method shown in Figure 6 that will be described below. Figure 3B shows a schematic cross-sectional view of the smartcard body 4 formed in accordance with the method below. Again, the thickness in the cross-sectional view has been exaggerated to better illustrate the internal components of the smartcard body 4.

The smartcard body 4 comprises an inlay 24 laminated between a front layer 26 and a back layer 28. The inlay 24 comprises a pair of embedded module interconnection wires 30 and an embedded antenna wire 20.

The antenna wire 20 comprises two antenna contact pads 22. The antenna wire 20 is embedded around the perimeter of the smartcard body 4. The antenna contact pads 22 are formed at either end of the antenna wire 20.

Each module interconnection wire 30 comprises four contact pads 16, 18. Two of the contact pads 16 are arranged at either end of each module interconnection wire 30 and, along with the antenna contact pads 22, define the smartcard IC module cavity region 10. These contact pads 16 of the module interconnection wire 30 will be referred to as the smartcard IC module contact pads. The remaining two contact pads 18 are arranged along each module interconnection wire 30 and define the biometric sensor module cavity region 12. These contact pads 18 will be referred to as the biometric sensor module contact pads. The biometric sensor module contact pads 18 are joined by an intermediate portion 32 of the module interconnection wire 30. The intermediate portion 32 of each module interconnection wire 30 is continuous between the biometric sensor module contact pads 18.

For simplicity, in Figure 3B only one module interconnection wire 30 is shown with its respective contact pads 16, 18. Although one of the biometric sensor contact pads 16 is shown in isolation, it should be understood that this contact pad 16 is still connected to a part of the embedded module interconnection wire 30 that is not shown such that the module interconnection wire 30 forms a single continuous wire. Additionally, the second module interconnection wire 30 and its respective contact pads are not shown in Figure 3B.

At step 100 of Figure 6, the inlay 24 is formed from a layer of plastic material such as PVC or polycarbonate. The plastic layer may be a large sheet of plastic such that several inlays may be formed on one sheet. For example, the plastic sheet may be sized to fit 25 inlays in a 5x5 arrangement. After a lamination process each laminated inlay can be cut out from the plastic sheet.

Wire embedding is performed using an embedding tool that can embed wires into the plastic layer to form the inlay 24. The embedding process involves feeding a wire through a head of the embedding tool. The embedding tool head is heated, for example by ultrasonic heating. The heated embedding tool heat melts the plastic layer in the area around the embedding tool head such that when the embedding tool head is moved across the surface of the plastic sheet, and the wire is fed through the embedding tool head, the wire is partially embedded into the plastic sheet. Using this embedding method, wires 20, 30 are embedded into the plastic sheet to form the inlay 24 of the smartcard body 4.

At step 102, two separate continuous module interconnection wires 30 are laid onto the plastic sheet. The contact pads 16, 18 are formed from the module interconnection wire 30 by forming a serpentine pattern from a portion of the module interconnection wire 30. This simplifies manufacture of the inlay 24, whilst ensuring that there is sufficient contact area to connect the module interconnection wire to the respective modules. However, in other embodiments, the contact pads 16, 18 may comprise metal plates that are welded or otherwise conductively connected to the interconnection wire 30.

An antenna wire 20 is laid to form a loop around the module interconnection wires 30. Similar to the contact pads 16, 18 of the module interconnection wires, the antenna contact pads 22 of the antenna wire 20 are formed from a serpentine portion of the antenna wire 20. The antenna wire 20 is arranged such that it will closely follow an outer perimeter of the smartcard body 4.

The above steps of laying the wires 20, 30 may be carried out multiple times at different locations on the plastic sheet in order to form several inlays in, for example, in a 5x5 arrangement, as discussed above.

After the wires 30 and antenna wire 20 have been laid and partially embedded into the plastic layer 24, the plastic layer 24 and wires 20, 30 are heated and are pressed between two flat, metal plates such that the wires 20, 30 are fully embedded within the plastic layer 24 to form a flat inlay of constant thickness. Embedding wires in this way causes the precise depth of the wires within the inlay to vary. For example, the wire depth may vary by approximately ±20µm within the inlay 24.

At step 104, the inlay 24 is prepared for lamination by placing the inlay 24 between a front layer 26 and a back layer 28 formed from plastic material. Again, the plastic material forming the front and back layers 26, 28 may be PVC or polycarbonate. The front layer 26 and back layer 28 each also comprise a large sheet of plastic, corresponding to the size of the sheet of plastic of the inlay 24. The front layer , inlay 24, and back layer are heated and pressed together to form a single laminated sheet of smartcard bodies 4 in a hot lamination process.

Each of the front and back layers 26, 28 may alternatively comprise multiple layers of stacked material. For example, the front and back layers 26, 28 layers may each comprise a clear PVC overlay (including a magnetic strip for the back layer 28) and a printed layer that may printed with an image.

Once the lamination process is complete, each smartcard body 4 is cut out from the laminated plastic sheet and is prepared for receiving the smartcard IC module 6 and the biometric sensor module 8.

To prepare the smartcard body 4, cavities are milled into the smartcard body 4. The cavities must be of sufficient dimensions to receive the smartcard IC module 6 and the biometric sensor module 8, and must expose the contact pads 16, 18, 22 for connection to the contacts 7, 9 of the smartcard IC module 6 and the biometric sensor module 8.

Two cavities are milled within each of the smartcard IC module cavity region 10 and the biometric sensor cavity region 12. A first of these cavities is relatively deep, and houses the bulk of the respective module, and second of these is relatively shallow and exposes the respective contact pads 16, 18, 22.

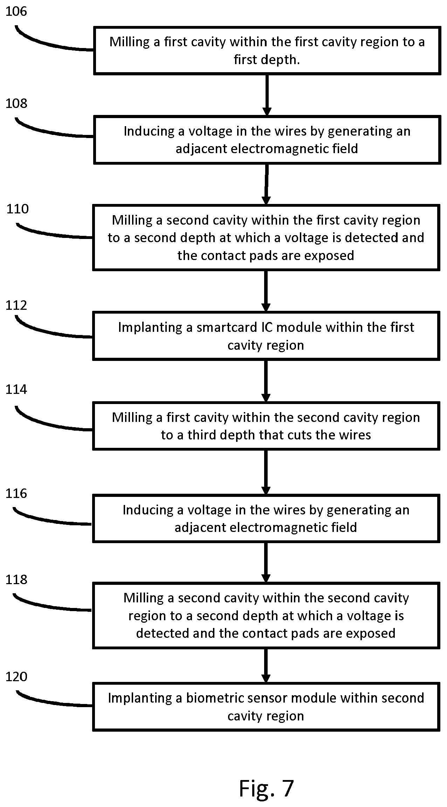

Because the precise depth of the embedded wires 20, 30 may vary within the smartcard body 4, it can be difficult to ensure that the contact pads are always sufficiently exposed when milling the relatively shallow cavities. The following method, shown in Figure 7, ensures that the contact pads are sufficiently exposed.

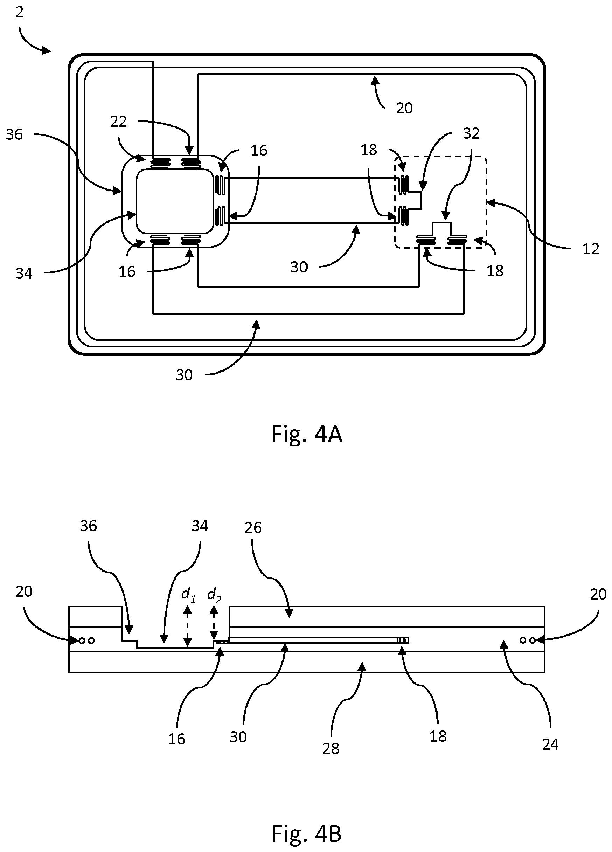

Figure 4A shows the smartcard body 4 that has been milled using steps 106 to 110 of the method shown in Figure 7. Figure 4B shows a cross-sectional view of the milled smartcard body 4. These Figures show the smartcard body 4, as shown in Figures 3A and 3B, after two cavities 34 and 36 have been milled into the smartcard IC module region of the smartcard body 4. Once again, the thickness in the cross-sectional view has been exaggerated to better illustrate the internal components of the smartcard body 4.

The milling of these cavities exposes the smartcard IC module contact pads 16 and the antenna contact pads 22 and produces a cavity that is sized to house the smartcard IC module 6.

Steps 106 to 110 are performed using a milling machine. The milling machine comprises a first milling station and a second milling station. Each milling station is equipped with a milling surface and a cutting tool. The second milling station is adjacent to an electromagnetic field generator, and the cutting tool of the second milling station is equipped with a voltage sensor. The voltage sensor is capable of detecting a voltage induced in the antenna wire 20 and module interconnection wires 30 when the cutting tool contacts them.

The continuous nature of the module interconnection wires 30 provides a larger area enclosed by those wires. This is advantageous during the milling process at the second milling station since a larger enclosed area is better able to harvest the generated electromagnetic field, and thus a larger voltage is induced in the continuous module interconnection wires 30 than if they had been discontinuous through the first cavity region 10.

It is not necessary to provide an intermediate wire portion connecting the antenna contact pads 22 since, by virtue of its design, the antenna wire 20 already encloses a large area. However, discontinuous, single wires 14a-d, as are necessary in the final smartcard body 4 (shown in Figure 2A), enclose virtually no area and thus would generate a significantly lower voltage than the continuous module interconnection wires 30.

At step 106, the smartcard body 4 is placed on the first milling station and a first cavity 34 is milled in the IC module cavity region 10 by the first milling station. When milling the first cavity 34 in the IC module cavity region 10, the milling machine mills to a depth *d₁* which corresponds to the total thickness of the IC module 6 that will be implanted. That is to say, the first cavity 34 is milled to a depth *d₁* such that when the IC module 6 is implanted into the milled IC module cavity region 10, it may sit substantially flush with the surface of the smartcard 2.

At step 108, the smartcard body 4 is moved to the second milling station and an electromagnetic field is generated by the adjacent electromagnetic field generator.

At step 110, a second cavity 36 is milled in the smartcard IC module cavity region 10 by the second milling station. When milling the second cavity 36 in the IC module cavity region 10, the milling machine mills to a depth *d₂*, which is shallower than the depth *d₁*, and is the depth at which a voltage is detected by the voltage sensor. Thus, the first cavity 34 of the smartcard IC module cavity region 10 may be considered the relatively deep cavity of the smartcard IC module cavity region 10 and the second cavity 36 of the smartcard IC module cavity region 10 may be considered the relatively shallow cavity of the smartcard IC module cavity region 10. This process ensures that the shallow cavity 36 has been milled to a depth at which the first contact pads 16 will be exposed for electrically connecting to the contact 7 of the smartcard IC module 6.

Milling the shallow cavity 36 in this way benefits from the increased induced voltage in the embedded wires 30 by virtue of the large continuous loop. Thus, the contact pads 16 within the smartcard IC module cavity region 10 may be better exposed than if the embedded wires 30 were discontinuous through the biometric sensor module cavity region 12.

When milling the relatively shallow cavity 36 of the smartcard IC module cavity region 10, the second milling station is configured to mill a fixed depth beyond the depth at which the voltage was detected. For example, the shallow cavity 36 may be milled to a depth that is about half the wire 20, 30 thickness further than the depth at which the voltage was detected. This maximises the surface area of exposed wire and thus provides for optimal electrical connection between the contact pads 16, 22 and the contacts 7 of the smartcard IC module 6.

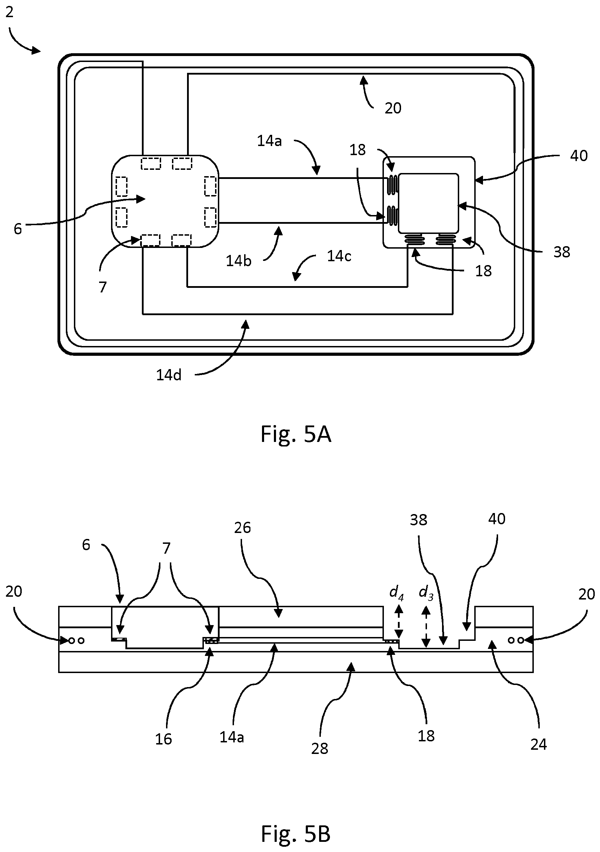

Figure 5A shows the smartcard body 4 that has been milled using steps 112 to 116 of the method shown in Figure 7. Figure 5B shows a cross-sectional view of the milled smartcard body 4. These Figures show the smartcard body 4, as shown in Figures 4A and 4B, after the smartcard IC module 6 has been implanted in the smartcard IC module cavity region 10 and two cavities 38 and 40 have been milled into the biometric sensor module cavity region of the smartcard body 4. Once again, the thickness in the cross-sectional view has been exaggerated to better illustrate the internal components of the smartcard body 4.

At step 112, the smartcard IC module 6 is implanted into the milled smartcard IC module cavity region 10. The implanting comprises placing the smartcard IC module 6 within the deep and shallow cavities 34, 36 of the smartcard IC module cavity region 10 and electrically connecting the contacts 7 of the smartcard IC module 6 to each of the contact pads 16, 22 that have been exposed in the smartcard IC module cavity region 10.

At step 114, the smartcard body is returned to the first milling station and a first cavity 38 is milled in the biometric sensor module cavity region 12. When milling the first cavity 38 in the biometric sensor module cavity region 12, the milling machine mills to a depth *d₃* which corresponds to the total thickness of the biometric sensor module 8 that will be implanted. That is to say, the first cavity 38 is milled to a depth *d₃* such that when the biometric sensor module 8 is implanted into the milled biometric sensor module cavity region 12, it may sit substantially flush with the surface of the smartcard 2. Additionally, the depth *d₃* and the location of the second cavity within the biometric sensor module cavity region 10 is such that the intermediate portions 32 of the module interconnection wires 30 are cut, separating the pair of second cavity region contact pads 18 of each wire 30 and forming the four disconnected embedded wires 14a-d.

At step 116, the smartcard body 4 is returned to the second milling station and an electromagnetic field is generated by the adjacent electromagnetic field generator. At step 118, a second cavity 40 is milled in the biometric sensor module cavity region 12 by the second milling station. When milling the second cavity 40 in the biometric sensor module cavity region 12, the milling machine mills to a depth *d₄,* that is shallower than the depth *d₃*, and is the depth at which a voltage is detected by the voltage sensor. Thus, the first cavity 38 of the biometric sensor module cavity region 12 may be considered the relatively deep cavity of the biometric sensor module cavity region 12 and the second cavity 40 of the biometric sensor module cavity region 12 may be considered the relatively shallow cavity of the biometric sensor module cavity region 12. This process ensures that the relatively shallow cavity 40 has been milled to a depth at which the first contact pads 16 will be exposed for electrically connecting to the contact 9 of the biometric sensor module 8.

Although the embedded wires 30 have already been cut by the deep cavity 38, the implanted smartcard IC module 6 that is electrically connected to the wires 14a-d serves to increase the loop size of the embedded wires 14a-d and thus increase the induced voltage during step 116. Milling of the shallow cavity in the biometric sensor module region may therefore still benefit from the improved voltage induction.

By electrically disconnecting the wires 14a-d, the wires 14a-d become suitable for transferring power and data between the smartcard IC module 6 and the biometric sensor module 8. In addition, by milling the deep cavity 38 to be deeper than the shallow cavity 40, the deep cavity 38 is sized to house the main bulk of the biometric sensor module 8 within the biometric sensor module cavity region 12.

At this stage, the smartcard body 4 with the implanted smartcard IC module 6 can be tested to ensure that the smartcard IC module 6 is functional and has been successfully implanted and electrically connected to the first cavity region contact pads 16. Alternatively, the testing can be performed at any stage after the smartcard IC module 6 has been implanted, for example immediately after the implanting.

At step 118, the biometric sensor module 8 is implanted in the biometric sensor module cavity region 12. The implanting comprises placing the biometric sensor module 8 within the deep and shallow cavities 38, 40 of the biometric sensor module cavity region 12 and electrically connecting the contacts 9 of the biometric sensor module 8 to each of the contact pads 18 that have been exposed in the biometric sensor module region 12.

In the preferred embodiment the relatively deep cavities 34, 38 of the two cavity regions 10, 12 are milled at a first milling station and the relatively shallow cavities 36, 40 are milled at a second milling station. However, alternative embodiments may make use of a single milling station that mills all the cavities 34, 36, 38, 40 or four milling stations that each mill one cavity.

The order of milling the cavities 34, 36, 38, 40 has been described with reference to the preferred embodiment. This order is particularly advantageous for several reasons. Firstly, since the biometric sensor module 8 is more expensive and delicate than the smartcard IC module 6, it is advantageous to mill the smartcard IC module cavities 34, 36 and implant the smartcard IC module 6 before implanting of the biometric sensor module 8 is carried out. This allows any testing of the smartcard IC module 6 to be carried out.

Secondly, by milling the relatively deep cavities 34, 38 before the shallow cavities 36, 40 in each respective cavity region 10, 12, the risk of pulling out the embedded wires 20, 30 during the milling process is reduced and thus throughput and yield of the process is increased. That is to say, if the relatively shallow cavities 36, 40 are milled first, there is an increased risk of damaging the embedded wires 20, 30 when milling the relatively deep cavities 34, 38 since the exposed wires are less securely held within the inlay 24.

Although the present embodiment has been described with two separate embedded wires 30 and a separate antenna wire 20, it will be appreciated that a further intermediate portion of wire may be provided between one of the first cavity region contact pads 16 of each module interconnection wire 30 such that a single continuous wire with eight contact pads 16, 18 runs between the smartcard IC module cavity region 10 and the biometric sensor module cavity region 12. In addition, an intermediate portion of the wire may be arranged between a contact pad 22 of the antenna wire 20 and a first cavity region contact pad 16 of a wire 30 such that the antenna wire 20 is continuous with one or both of the module interconnection wires 30.

In the illustrated embodiment, an anisotropic conductive film or an anisotropic conductive glue is used within the respective cavities in each cavity region 10, 12 to electrically connect the contacts 7, 9 of the smartcard IC module 6 and/or the biometric sensor module 8 to the respective contact pads 16, 18, 22 of the embedded wires 20, 30. Optionally, an adhesive epoxy may be applied to side walls of the cavities to retain the smartcard IC module 6 and/or the biometric sensor module 8.

## Claims

1. A method for manufacturing a smartcard body (4), comprising:
forming a layer of plastic material; and
embedding a wire within the layer of a plastic material, **characterized in that** the wire extends from a first contact pad in a first cavity region (10), continuously through first and second contact pads in a second cavity region (12), and to a second contact pad in the first cavity region (10) of the layer.

2. A method according to claim 1, further comprising laminating the layer of plastic material between front and back layers formed from a plastic material

3. A method according to claim 1 or 2,
wherein the first and second contact pads in the first cavity region (10) or the first and second contact pads in the second cavity region (12) are configured to be exposed by a first cavity milled in the respective cavity region to a first depth, and
wherein a portion of the wire connecting the first and second contact pads in the second region extends through the second cavity region (12), the portion of the wire being configured to be cut by a second cavity milled in the second cavity region (12) to a second depth.

4. A method according to any of the preceding claims, further comprising embedding an antenna wire within the layer for connection to a module received in one of the first and second cavity regions.

5. A method for manufacturing a smartcard (2), comprising:
manufacturing a smartcard body (4) according to any of the preceding claims,
said smartcard body (4) comprising a first cavity region (10) and a second cavity region (12), wherein a wire is embedded within the smartcard body (4), the wire extending from a first contact pad (16) in the first cavity region (10), continuously through first and second contact pads (18) in the second cavity region (12), and to a second contact pad (22) in the first cavity region (10);
milling a first cavity (34) within one of the first cavity region (10) and the second cavity region (12) to a first depth that exposes the first and second contact pads in the respective cavity region; and
after milling the first cavity (34), milling a second cavity (36) within said first cavity region (10) or second cavity region (12) to a second depth that cuts the wire between the first and second contact pads of the second cavity region.

6. A method according to claim 5, further comprising:
implanting a first module within the first cavity, the implanting comprising electrically connecting first and second contacts of the first module to the first and second contact pads in the respective cavity region.

7. A method according to claim 6, wherein the first module comprises one of a smartcard IC module and a biometric sensor module

8. A method according to any of claims 5 to 7, further comprising:
generating an electromagnetic field adjacent to the smartcard body, wherein the electromagnetic field induces an induced voltage in the wire, and wherein a sensor is configured to detect that the first cavity has been milled to the first depth based on detection of the induced voltage.

9. A method according to claim 8, where the first cavity is milled by a milling machine, and wherein the sensor is electrically coupled to a cutting tool of the milling machine.

10. A method according to any of claims 5 to 9, wherein the first cavity is milled in the first cavity region (10), the method further comprising:
milling a third cavity exposing the first and second contact pads in the second cavity region (12).

11. A method according to claim 10, further comprising:
implanting a second module into the second cavity region (12), the implanting comprising electrically connecting first and second contacts of the second module to the first and second contacts pads in the second cavity region (12).

12. A smartcard body comprising a wire embedded within the smartcard body, wherein the smartcard body defines a first cavity region (10) for milling to receive a first module and a second cavity region (12) for milling to receive a second module, and **characterized in that** the wire extends from a first contact pad in the first cavity region (10), continuously through first and second contact pads in the second cavity region (12), and to a second contact pad in the first cavity region (10).

13. A smartcard body according to claim 12,
wherein the first and second contact pads in the first cavity region (10) or the first and second contact pads on the second cavity region (12) are configured to be exposed by a first cavity milled in the respective cavity region to a first depth, and
wherein a portion of the wire connecting the first and second contact pads in the second cavity region (12) extends through the second cavity region (12), the portion of the wire being configured to be cut by a second cavity milled in the second cavity region (12) to a second depth.

14. A smartcard body according to claim 12 or 13, wherein the smartcard body comprises an antenna wire embedded within a body formed of plastic material, the antenna wire being configured for connection to a module received in one of the first and second cavity regions.

## Patentansprüche

1. Verfahren zur Herstellung eines Smartcard-Körpers (4), umfassend: Ausbilden einer Schicht aus Kunststoffmaterial; und Einbetten eines Drahtes in die Schicht aus Kunststoffmaterial, wobei sich der Draht von einem ersten Kontaktfeld in einem ersten Aussparungsbereich (10) durchgehend über erste und zweite Kontaktfelder in einem zweiten Aussparungsbereich (12) bis zu einem zweiten Kontaktfeld in dem ersten Aussparungsbereich (10) der Schicht erstreckt.

2. Verfahren nach Anspruch 1, ferner umfassend das Laminieren der Schicht aus Kunststoffmaterial zwischen eine vordere und eine hintere Schicht, die aus einem Kunststoffmaterial gebildet sind.

3. Verfahren nach Anspruch 1 oder 2,
wobei die ersten und zweiten Kontaktflächen im ersten Hohlraumbereich (10) oder die ersten und zweiten Kontaktflächen im zweiten Hohlraumbereich (12) so ausgebildet sind, dass sie durch einen ersten Hohlraum freigelegt werden, der im jeweiligen Hohlraumbereich bis zu einer ersten Tiefe gefräst wird, und
wobei sich ein Abschnitt des Drahtes, der die ersten und zweiten Kontaktflächen im zweiten Bereich verbindet, durch den zweiten Hohlraumbereich (12) erstreckt, wobei der Drahtabschnitt so ausgebildet ist, dass er durch einen zweiten Hohlraum durchtrennt wird, der im zweiten Hohlraumbereich (12) bis zu einer zweiten Tiefe gefräst wird.

4. Verfahren nach einem der vorhergehenden Ansprüche, ferner umfassend das Einbetten eines Antennendrahts in die Schicht zur Verbindung mit einem Modul, das in einem der ersten und zweiten Hohlraumbereiche aufgenommen wird.

5. Verfahren zur Herstellung einer Smartcard (2), umfassend:
Herstellen eines Smartcard-Körpers (4) nach einem der vorhergehenden Ansprüche, wobei der Smartcard-Körper (4) einen ersten Hohlraumbereich (10) und einen zweiten Hohlraumbereich (12) aufweist, wobei ein Draht in den Smartcard-Körper (4) eingebettet ist, wobei sich der Draht von einem ersten Kontaktpad (16) im ersten Hohlraumbereich (10) durchgehend über erste und zweite Kontaktpads (18) im zweiten Hohlraumbereich (12) bis zu einem zweiten Kontaktpad (22) im ersten Hohlraumbereich (10) erstreckt;
Fräsen eines ersten Hohlraums (34) in einem der Bereiche - erster Hohlraumbereich (10) oder zweiter Hohlraumbereich (12) - bis zu einer ersten Tiefe, bei der die ersten und zweiten Kontaktpads in dem jeweiligen Hohlraumbereich freigelegt werden; und
nach dem Fräsen des ersten Hohlraums (34), Fräsen eines zweiten Hohlraums (36) in dem genannten ersten Hohlraumbereich (10) oder zweiten Hohlraumbereich (12) bis zu einer zweiten Tiefe, bei der der Draht zwischen den ersten und zweiten Kontaktpads des zweiten Hohlraumbereichs durchtrennt wird.

6. Verfahren nach Anspruch 5, ferner umfassend:
Einsetzen eines ersten Moduls in den ersten Hohlraum, wobei das Einsetzen das elektrische Verbinden von ersten und zweiten Kontakten des ersten Moduls mit den ersten und zweiten Kontaktflächen im jeweiligen Hohlraumbereich umfasst.

7. Verfahren nach Anspruch 6, wobei das erste Modul entweder ein Smartcard-IC-Modul oder ein biometrisches Sensormodul umfasst.

8. Verfahren nach einem der Ansprüche 5 bis 7, ferner umfassend:
Erzeugen eines elektromagnetischen Feldes benachbart zum Smartcard-Körper, wobei das elektromagnetische Feld eine induzierte Spannung in dem Draht induziert und wobei ein Sensor dazu konfiguriert ist, basierend auf der Erfassung der induzierten Spannung zu detektieren, dass der erste Hohlraum bis zur ersten Tiefe gefräst wurde.

9. Verfahren nach Anspruch 8, wobei die erste Kavität mittels einer Fräsmaschine gefräst wird und wobei der Sensor elektrisch mit einem Schneidwerkzeug der Fräsmaschine gekoppelt ist.

10. Verfahren nach einem der Ansprüche 5 bis 9, wobei die erste Kavität im ersten Kavitätsbereich (10) gefräst wird, wobei das Verfahren ferner umfasst:
Fräsen einer dritten Kavität im zweiten Kavitätsbereich (12), welche die ersten und zweiten Kontaktflächen freilegt.

11. Verfahren nach Anspruch 10, ferner umfassend:
Einsetzen eines zweiten Moduls in den zweiten Kavitätsbereich (12), wobei das Einsetzen das elektrische Verbinden erster und zweiter Kontakte des zweiten Moduls mit den ersten und zweiten Kontaktflächen im zweiten Kavitätsbereich (12) umfasst.

12. Smartcard-Körper, umfassend einen in den Smartcard-Körper eingebetteten Draht, wobei der Smartcard-Körper einen ersten Aussparungsbereich (10) zum Fräsen zur Aufnahme eines ersten Moduls und einen zweiten Aussparungsbereich (12) zum Fräsen zur Aufnahme eines zweiten Moduls definiert, und wobei sich der Draht von einer ersten Kontaktfläche im ersten Aussparungsbereich (10) durchgehend über erste und zweite Kontaktflächen im zweiten Aussparungsbereich (12) bis zu einer zweiten Kontaktfläche im ersten Aussparungsbereich (10) erstreckt.

13. Smartcard-Körper nach Anspruch 12,
wobei die ersten und zweiten Kontaktflächen im ersten Aussparungsbereich (10) oder die ersten und zweiten Kontaktflächen im zweiten Aussparungsbereich (12) so konfiguriert sind, dass sie durch eine erste, in den jeweiligen Aussparungsbereich bis zu einer ersten Tiefe gefräste Aussparung freigelegt werden, und
wobei sich ein Abschnitt des Drahtes, der die ersten und zweiten Kontaktflächen im zweiten Aussparungsbereich (12) verbindet, durch den zweiten Aussparungsbereich (12) erstreckt, wobei der Drahtabschnitt so konfiguriert ist, dass er durch eine zweite, in den zweiten Aussparungsbereich (12) bis zu einer zweiten Tiefe gefräste Aussparung durchtrennt wird.

14. Smartcard-Körper nach Anspruch 12 oder 13, wobei der Smartcard-Körper einen Antennendraht umfasst, der in einen aus Kunststoffmaterial gebildeten Körper eingebettet ist, wobei der Antennendraht zur Verbindung mit einem Modul konfiguriert ist, das in einem der ersten und zweiten Aussparungsbereiche aufgenommen ist.

## Revendications

1. Procédé de fabrication d'un corps de carte à puce (4), comprenant :
la formation d'une couche de matériau plastique ; et
le noyage d'un fil dans la couche de matériau plastique, le fil s'étendant depuis une première plage de contact située dans une première zone de cavité (10), en passant de manière continue par des première et seconde plages de contact situées dans une seconde zone de cavité (12), jusqu'à une seconde plage de contact située dans la première zone de cavité (10) de la couche.

2. Procédé selon la revendication 1, comprenant en outre le laminage de la couche de matériau plastique entre des couches avant et arrière formées d'un matériau plastique.

3. Procédé selon la revendication 1 ou 2,
dans lequel les première et seconde plages de contact situées dans la première zone de cavité (10) ou les première et seconde plages de contact situées dans la seconde zone de cavité (12) sont configurées pour être mises à nu par une première cavité fraisée dans la zone de cavité respective jusqu'à une première profondeur, et
dans lequel une partie du fil reliant les première et seconde plages de contact dans la seconde zone s'étend à travers la seconde zone de cavité (12), ladite partie du fil étant configurée pour être sectionnée par une seconde cavité fraisée dans la seconde zone de cavité (12) jusqu'à une seconde profondeur.

4. Procédé selon l'une quelconque des revendications précédentes, comprenant en outre l'intégration d'un fil d'antenne dans la couche pour le raccordement à un module logé dans l'une des première et seconde zones de cavité.

5. Procédé de fabrication d'une carte à puce (2), comprenant :
la fabrication d'un corps de carte à puce (4) selon l'une quelconque des revendications précédentes,
ledit corps de carte à puce (4) comprenant une première zone de cavité (10) et une seconde zone de cavité (12), dans lequel un fil est intégré dans le corps de carte à puce (4), le fil s'étendant depuis une première plage de contact (16) située dans la première zone de cavité (10), en passant de manière continue par des première et seconde plages de contact (18) situées dans la seconde zone de cavité (12), jusqu'à une seconde plage de contact (22) située dans la première zone de cavité (10) ;
le fraisage d'une première cavité (34) dans l'une de la première zone de cavité (10) et de la seconde zone de cavité (12) jusqu'à une première profondeur exposant les première et seconde plages de contact situées dans la zone de cavité respective ; et
après le fraisage de la première cavité (34), le fraisage d'une seconde cavité (36) dans ladite première zone de cavité (10) ou seconde zone de cavité (12) jusqu'à une seconde profondeur coupant le fil entre les première et seconde plages de contact de la seconde zone de cavité.

6. Procédé selon la revendication 5, comprenant en outre :
l'implantation d'un premier module dans la première cavité, l'implantation comprenant la connexion électrique de premier et second contacts du premier module aux première et seconde plages de contact situées dans la région respective de la cavité.

7. Procédé selon la revendication 6, dans lequel le premier module comprend soit un module de circuit intégré de carte à puce, soit un module de capteur biométrique.

8. Procédé selon l'une quelconque des revendications 5 à 7, comprenant en outre :
la génération d'un champ électromagnétique au voisinage du corps de la carte à puce, le champ électromagnétique induisant une tension induite dans le fil, et un capteur étant configuré pour détecter que la première cavité a été fraisée jusqu'à la première profondeur sur la base de la détection de la tension induite.

9. Procédé selon la revendication 8, dans lequel la première cavité est usinée par fraisage au moyen d'une fraiseuse, et dans lequel le capteur est couplé électriquement à un outil de coupe de la fraiseuse.

10. Procédé selon l'une quelconque des revendications 5 à 9, dans lequel la première cavité est usinée par fraisage dans la première zone de cavité (10), le procédé comprenant en outre :
l'usinage par fraisage d'une troisième cavité exposant les première et seconde plages de contact dans la seconde zone de cavité (12).

11. Procédé selon la revendication 10, comprenant en outre :
l'implantation d'un second module dans la seconde zone de cavité (12), l'implantation comprenant la connexion électrique de premier et second contacts du second module aux première et seconde plages de contact dans la seconde zone de cavité (12).

12. Corps de carte à puce comprenant un fil noyé dans le corps de la carte à puce, dans lequel le corps de la carte à puce définit une première zone de cavité (10) destinée à être fraisée pour recevoir un premier module et une seconde zone de cavité (12) destinée à être fraisée pour recevoir un second module, et dans lequel le fil s'étend depuis une première plage de contact située dans la première zone de cavité (10), en passant de manière continue par des première et seconde plages de contact situées dans la seconde zone de cavité (12), jusqu'à une seconde plage de contact située dans la première zone de cavité (10).

13. Corps de carte à puce selon la revendication 12,
dans lequel les première et seconde plages de contact situées dans la première zone de cavité (10) ou les première et seconde plages de contact situées dans la seconde zone de cavité (12) sont configurées pour être mises à nu par une première cavité fraisée dans la zone de cavité respective jusqu'à une première profondeur, et
dans lequel une partie du fil reliant les première et seconde plages de contact dans la seconde zone de cavité (12) s'étend à travers la seconde zone de cavité (12), ladite partie du fil étant configurée pour être sectionnée par une seconde cavité fraisée dans la seconde zone de cavité (12) jusqu'à une seconde profondeur.

14. Corps de carte à puce selon la revendication 12 ou 13, dans lequel le corps de la carte à puce comprend un fil d'antenne noyé dans un corps formé d'une matière plastique, le fil d'antenne étant configuré pour être connecté à un module reçu dans l'une des première et seconde zones de cavité.
